# EUROPÄISCHE PATENTSCHRIFT

(11) **EP 3 295 104 B1**
(45) Veröffentlichungstag und Bekanntmachung des Hinweises auf die Patenterteilung: **07.08.2019**
(21) Anmeldenummer: 16722635.6
(22) Anmeldetag: 09.05.2016
(51) Int. Cl.: F26B 15/12

(54) **ÜBERGABEEINRICHTUNG UND FÖRDEREINRICHTUNG ZUM TRANSPORTIEREN VON STÄBEN FÜR LANGE TEIGWAREN, VERFAHREN ZUM BETREIBEN EINER ÜBERGABEEINRICHTUNG ODER EINER FÖRDEREINRICHTUNG UND TEIGWARENTROCKNER**
TRANSFER DEVICE AND CONVEYOR DEVICE FOR TRANSPORTING RODS FOR LONG PASTA, METHOD FOR OPERATING A TRANSFER DEVICE OR A CONVEYOR, AND PASTA DRYER
DISPOSITIF DE TRANSFERT ET DISPOSITIF DE TRANSPORT DE TIGES POUR DES PRODUITS LONGS À BASE DE PÂTE, PROCÉDÉ DE FONCTIONNEMENT D'UN DISPOSITIF DE TRANSFERT OU D'UN DISPOSITIF DE TRANSPORT ET SÉCHOIR À PÂTE

(30) Priorität: 13.05.2015 EP 15167694
(43) Veröffentlichungstag der Anmeldung: 21.03.2018
(73) Patentinhaber: Bühler AG, 9240 Uzwil (CH)
(72) Erfinder: PTAK, Lukas, 9015 St. Gallen (CH)
(74) Vertreter: Hepp Wenger Ryffel AG
(86) Internationale Anmeldenummer: PCT/EP2016/060324
(87) Internationale Veröffentlichungsnummer: WO 2016/180773

(56) Entgegenhaltungen:
- EP-A1- 1 073 561
- US-A- 2 732 627
- US-A- 2 884 115

## Beschreibung

Die vorliegende Erfindung betrifft eine Übergabeeinrichtung zum Transportieren von Stäben für lange Teigwaren von einem ersten Kettenförderer zu einem zweiten Kettenförderer, eine Fördereinrichtung zum Transportieren von Stäben für lange Teigwaren mit einer solchen Übergabeeinrichtung, ein Verfahren zu Betreiben einer solchen Übergabeeinrichtung oder einer solchen Fördereinrichtung sowie einen Teigwarentrockner zum Trocknen von langen Teigwaren.

Lange Teigwaren, wie beispielsweise Spaghetti, werden üblicherweise nach dem Pressen auf Stäbe gehängt, welche mit Hilfe von Kettenförderern durch den Trocknungsraum eines Teigwarentrockners gefördert werden. Ein Trocknungsraum enthält gewöhnlich eine Vielzahl von Kettenförderern, die teilweise übereinander und teilweise nebeneinander angeordnet sind. Um die Stäbe mit den darauf aufgehängten Teigwaren von einem ersten Kettenförderer zu einem zweiten Kettenförderer zu transportieren, werden Übergabeeinrichtungen eingesetzt. Diese nehmen die Stäbe von einem ersten Kettenförderer auf, Transportieren sie einem zweiten Kettenförderer und legen sie dort wieder ab.

Derartige Übergabeeinrichtungen sind beispielsweise aus CH 342 160, US 2,583, 847, US 2,732,627, CH 412 752, CH 447 983 und EP 2 634 518 A1 bekannt. In der CH 342 160 ist ein Ausführungsbeispiel offenbart, in dem die Übergabeeinrichtung selbst ein Paar von Elevatorketten aufweist, mit denen die Stäbe von einem ersten Kettenförderer zu einem zweiten Kettenförderer transportiert werden. Die Elevatorketten verfügen über Pendel, welche bei einer Bewegung von unten nach oben von einem oberen Trum des ersten Kettenförderers die Stäbe aufnehmen und anschliessend bei einer Bewegung von oben nach unten auf einem oberen Trum des zweiten Kettenförderers ablegen.

Bei dem in der CH 342 160 dargestellten Ausführungsbeispiel passieren die Pendel nach dem Passieren des oberen Trums des zweiten Kettenförderers auch dessen unteren Trum. Da sich dort die oberen, die Stäbe fördernden Trume in der gleichen Richtung bewegen, ist es möglich, dass die Elevatorketten der Übergabeeinrichtung diese oberen Trume nur einmal passieren, so dass es zu keinen Kollisionen zwischen den Pendeln und bereits abgelegten Stäben kommt.

Allerdings ist es oftmals aus Platzgründen gewünscht, dass die beiden Kettenförderer die Stäbe in entgegengesetzter Richtung fördern, beispielsweise um eine Zickzack-Anordnung mehrerer Kettenförderer im Trocknungsraum zu ermöglichen. Bei einer Förderung in entgegengesetzten Richtungen ist jedoch ein nur einmaliges Passieren des oberen Trums des zweiten Kettenförderers nicht ohne weiteres möglich. Die Pendel würden dann nämlich beim zweiten Passieren des oberen Trums des zweiten Kettenförderers von unten nach oben mit den dort bereits abgelegten Stäben kollidieren und diese beispielsweise unerwünscht wieder abheben. Durch entsprechende Synchronisierung wäre es zwar möglich, diesem Problem zu entgehen, indem sich die Pendel beim zweiten Passieren des oberen Trums des zweiten Kettenförderers von unten nach oben zwischen zwei benachbarten Stäben hindurchbewegen. Hierdurch sind jedoch grosse Abstände zwischen den benachbarten Stäben erforderlich, was den möglichen Durchsatz der Teigwaren deutlich reduziert und somit der Wirtschaftlichkeit abträglich ist.

Es ist daher eine Aufgabe der vorliegenden Erfindung, eine Übergabeeinrichtung zum Transportieren von Stäben für lange Teigwaren bereitzustellen, welche die aus dem Stand der Technik bekannten Nachteile nicht aufweist. Insbesondere soll auch ein Transport von einem ersten Kettenförderer zu einem zweiten Kettenförderer möglich sein, die die Stäbe in entgegengesetzten Richtungen fördern, ohne dass eine Kollision der Pendel mit noch nicht vom ersten Kettenförderer aufzunehmenden oder bereits auf dem zweiten Kettenförderer abgelegten Stäben auftritt.

Diese und weitere Aufgaben werden gelöst durch eine erfindungsgemässe Übergabeeinrichtung zum Transportieren von Stäben für lange Teigwaren von einem ersten Kettenförderer zu einem zweiten Kettenförderer. Die Übergabeeinrichtung enthält ein Paar von Transportketten sowie eine Vielzahl von Pendeln. Jedes Pendel ist um eine Pendelachse pendelnd an einer der Transportketten angeordnet. Diese Pendelachse weist in Richtung auf die jeweils andere Transportkette. Die Pendel enthalten jeweils mindestens eine Aufnahme zum Aufnehmen je eines Endes eines Stabes.

Erfindungsgemäss ist die mindestens eine Aufnahme zwischen einer Mitnahmeposition und einer Passierposition bewegbar, wobei die mindestens eine Aufnahme beim Passieren eines Trums des ersten Kettenförderers oder des zweiten Kettenförderer nur in der Mitnahmeposition, nicht aber auch in der Passierposition, in Eingriff mit einem Endes des Stabes bringbar ist.

Die Übergabeeinrichtung kann aufgrund dieser erfindungsgemässen Eigenschaften in der folgenden vorteilhaften Weise betrieben werden:
Bevor ein oder mehrere Stäbe aufgenommen werden, werden zunächst die Aufnahmen zweier gegenüberliegender Pendel in die Mitnahmeposition bewegt. Zwei Pendel werden dabei als "gegenüberliegend" bezeichnet, wenn ein erstes dieser Pendel an einer der beiden Transportketten angeordnet ist und ein zweites dieser Pendel an der anderen Transportkette angeordnet ist und wenn diese beiden Pendel so angeordnet sind, dass sie jeweils ein Ende ein und desselben Stabes aufnehmen können. Anschliessend wird mittels der Aufnahmen der Pendel ein Stab von einem oberen Trum des ersten Kettenförderers aufgenommen. Dies ist möglich, da die Aufnahmen in der Mitnahmeposition in Eingriff mit den Enden des Stabes bringbar sind. Dieser Stab wird dann vom ersten Kettenförderer zum zweiten Kettenförderer transportiert, wo er auf einem oberen Trum dieses zweiten Kettenförderers abgelegt wird. Anschliessend werden die Aufnahmen der Pendel in die Passierposition bewegt. Sie sind dann also nicht mehr in Eingriff mit einem Stab bringbar - vor allem dann, wenn die Pendel den oberen Trum des zweiten Kettenförderers nochmals von unten nach oben passieren. Auf diese Weise wird verhindert, dass die Pendel mit den bereits auf dem oberen Trum des zweiten Kettenförderers abgelegten Stäben kollidieren und diesen beispielsweise unerwünscht wieder abheben.

Die pendelnde Anordnung der Pendel an den Transportketten sorgt dafür, dass sich die Orientierung der Stäbe auch beim Umlenken der Transportketten nicht ändert. Zu diesem Zweck ist es auch vorteilhaft, wenn die mindestens eine Aufnahme unterhalb der Pendelachse angeordnet ist, denn dann trägt das Gewicht des aufgenommenen Stabes ebenfalls für das Einhalten der gewünschten Orientierung bei.

Bevorzugt weisen die Pendel jeweils eine Halterung auf, mit der sie an der Transportkette befestigt sind, sowie einen Mitnehmer. Dies ermöglicht es, dass die Halterung lediglich um die Pendelachse pendelnd angeordnet sein muss. Dies erlaubt eine insgesamt stabilere Befestigung der Pendel an der Transportkette. Lediglich die Aufnahme muss zwischen der Mitnahmeposition und der Passierposition bewegbar sein.

Vorteilhafterweise ist der Mitnehmer gegenüber der Halterung um eine Schwenkachse zwischen der Mitnahmeposition und der Passierposition schwenkbar, wobei die Schwenkachse transversal, insbesondere senkrecht zur Pendelachse verläuft. Eine solche Schwenkbarkeit ist baulich besonders einfach zu realisieren.

Mit weiterem Vorteil ist die mindestens eine Aufnahme oberhalb der Schwenkachse der Mitnehmer angeordnet. Auf diese Weise können die Enden der Stäbe besonderes stabil aufgenommen werden.

Der Mitnehmer verfügt bevorzugt über ein erstes Paar von Anschlagflächen, welche den in der Mitnahmeposition vorliegenden Winkel definieren, sowie über zweite Anschlagflächen, welche den in der Passierposition vorliegenden Winkel definieren.

Vorteilhafterweise weist der Mitnehmer jeweils mindestens zwei Aufnahmen zum gleichzeitigen Aufnehmen je eines Endes zweier Stäbe auf. Folglich können mit einem Paar von zwei gegenüberliegenden Pendeln gleichzeitig zwei Stäbe aufgenommen werden. Bei vorgegebener Taktfrequenz (das heisst bei vorgegebener Anzahl der pro Zeiteinheit vom ersten oder vom zweiten Kettenförderer geförderten Stäbe) müssen sich die Transportketten der Übergabeeinrichtung also nur mit halber Geschwindigkeit bewegen (oder bei mehr als zwei Aufnahmen sogar mit noch entsprechend geringerer Geschwindigkeit). Auf diese Weise wird die mechanische Belastung mehrerer Bauteile der Übergabeeinrichtung stark reduziert. Im gleichen Masse können auch die Beschleunigungen reduziert werden, sodass die Teigwaren bei Umlenkungen weniger stark schwingen und folglich das Risiko von Beschädigungen oder Verflechtungen der Teigwaren reduziert wird. Vorteilhafterweise sind die beiden Aufnahmen so angeordnet und ausgebildet, dass sich zwei gleichzeitig von ihnen aufgenommene Stäbe im Wesentlichen auf gleicher Höhe befinden.

In Abwesenheit äusserer Einwirkungen, insbesondere ohne Einwirkung der weiter unten beschriebenen Führungsmittel, befindet sich der Mitnehmer bevorzugt in der Mitnahmeposition. Vorteilhafterweise befindet er sich in Abwesenheit äusserer Einwirkungen aufgrund seines eigenen Gewichts in der Mitnahmeposition.

Wenn die Transportketten der Übergabeeinrichtung Elevatorketten sind, die zum Passieren eines oberen Trums des ersten Kettenförderers von unten nach oben ausgebildet und angeordnet sind, ist es vorteilhaft, wenn die Übergabeeinrichtung erste Führungsmittel aufweist, welche vor einem Passieren des oberen Trums des ersten Kettenförderers von unten nach oben die mindestens eine Aufnahme eines aufnahmeenthaltenden Mitnehmers in die Mitnahmeposition bewegen. Auf diese Weise können die Aufnahmen des Mitnehmers dann die Enden eines auf dem oberen Trum des ersten Kettenförderers geförderten Stabes aufnehmen.

Wenn die Transportketten der Übergabeeinrichtung Elevatorketten sind, die zum Passieren eines oberen Trums des ersten Kettenförderers von oben nach unten ausgebildet und angeordnet sind, ist es vorteilhaft, wenn die Übergabeeinrichtung Führungsmittel aufweist, welche vor einem Passieren des oberen Trums des ersten Kettenförderers von oben nach unten die mindestens eine Aufnahme in die Passierposition bewegen. Dann nämlich kann verhindert werden, dass das Pendel mit den auf dem oberen Trum des ersten Kettenförderers bereit liegenden Stäben kollidiert.

Wenn die Transportketten der Übergabeeinrichtung Elevatorketten sind, die zum Passieren eines oberen Trums des zweiten Kettenförderers von unten nach oben ausgebildet und angeordnet sind, ist es vorteilhaft, wenn die Übergabeeinrichtung zweite Führungsmittel aufweist, welche vor einem Passieren des oberen Trums von unten nach oben die mindestens eine Aufnahme eines aufnahmeenthaltenden Mitnehmers in die Mitnahmeposition bewegen. Auf diese Weise können die die Aufnahmen des Mitnehmers dann die Enden eines auf dem oberen Trum des ersten Kettenförderers geförderten Stabes aufnehmen.

Bevorzugt sind die zweiten Führungsmittel zum Bewegen der Aufnahme des Mitnehmers in die Passierposition vor einem Passieren des oberen Trums des zweiten Kettenförderers von oben nach unten ausgebildet und angeordnet sind. Dies gewährleistet, dass die Pendel nicht beim Passieren von oben nach unten mit auf dem oberen Trum des zweiten Kettenförderers befindlichen Stäben kollidieren.

Die erfindungsgemässe Übergabeeinrichtung kann beispielsweise zum Transportieren von Stäben für lange Teigwaren von einem ersten Kettenförderer auf einer ersten Höhe zu einem zweiten Kettenförderer auf einer zweiten Höhe ausgebildet sein, wobei die erste Höhe von der zweiten Höhe verschieden ist und insbesondere grösser oder kleiner als die zweite Höhe sein kann. Dies ermöglicht einen vertikalen Transport der Stäbe, beispielsweise zwischen zwei in einem Trockner übereinander angeordneten Kettenförderern.

Ein weiterer Aspekt der Erfindung betrifft eine Fördereinrichtung zum Transportieren von Stäben für lange Teigwaren. Diese Fördereinrichtung enthält einen ersten Kettenförderer mit einem Paar von ersten Förderketten, einen zweiten Kettenförderer mit einem Paar von zweiten Förderketten sowie eine wie oben beschriebene Übergabeeinrichtung zum Transportieren der Stäbe vom ersten Kettenförderer zum zweiten Kettenförderer. Wie oben ausgeführt wurde, ist die erfindungsgemässe Übergabeeinrichtung besonders dann gegenüber dem Stand der Technik vorteilhaft, wenn die Stäbe von den beiden Kettenförderern in entgegengesetzten Richtungen gefördert werden.

In einer ersten möglichen Ausführungsform sind die Transportketten der Übergabeeinrichtung und der erste und der zweite Kettenförderer derart ausgebildet und angeordnet, dass die Transportketten in dieser Reihenfolge
- von unten nach oben einen oberen Trum des ersten Kettenförderers passieren, wobei sich die dortigen Aufnahmen des Mitnehmers des Pendels in der Mitnahmeposition befinden, um mindestens einen Stab aufnehmen und transportieren zu können,
- von oben nach unten einen oberen Trum des zweiten Kettenförderers passieren, wobei sich die dortigen Aufnahmen des Mitnehmers des Pendels noch immer in der Mitnahmeposition befinden, um dort den mindestens einen Stab ablegen zu können,
- von oben nach unten den oberen Trum des ersten Kettenförderers passieren, wobei sich die dortigen Aufnahmen des Mitnehmers des Pendels in der Passierposition befinden, um nicht mit auf dem ersten Kettenförderer liegenden Stäben zu kollidieren.

In einer zweiten möglichen Ausführungsform sind die Transportketten der Übergabeeinrichtung und der erste und der zweite Kettenförderer derart ausgebildet und angeordnet, dass die Transportketten in dieser Reihenfolge
- von unten nach oben einen oberen Trum des ersten Kettenförderers passieren, wobei sich die dortigen Aufnahmen des Mitnehmers des Pendels in der Mitnahmeposition befinden, um dort mindestens einen Stab aufnehmen und transportieren zu können,
- von oben nach unten einen oberen Trum des zweiten Kettenförderers passieren, wobei sich die dortigen Aufnahmen des Mitnehmers des Pendels in der Mitnahmeposition befinden, um dort den mindestens einen Stab ablegen zu können,
- von unten nach oben einen oberen Trum des zweiten Kettenförderers passieren, wobei sich die dortigen Aufnahmen des Mitnehmers des Pendels in der Passierposition befinden, um nicht die auf dem zweiten Kettenförderer liegenden Stäben aufnehmen und transportieren zu können.

Wie oben bereits erläutert wurde, können die erfindungsgemässe Übergabeeinrichtung oder die erfindungsgemässe Fördereinrichtung vorteilhaft in einem ebenfalls erfindungsgemässen Verfahren verwendet werden. Dieses Verfahren enthält die folgenden Schritte:
a) Bewegen der jeweils mindestens einen Aufnahme der Mitnehmer zweier gegenüberliegender Pendel in die Mitnahmeposition,
b) Aufnehmen mindestens eines Stabes von einem oberen Trum des ersten Kettenförderers mittels der Aufnahmen der Mitnehmer der zwei Pendel,
c) Transportieren des Stabes vom ersten Kettenförderer zum zweiten Kettenförderer,
d) Ablegen des Stabes auf einem oberen Trum des zweiten Kettenförderers,
e) Bewegen der der Aufnahmen der Mitnehmer der zwei Pendel in die Passierposition.

Ein weiterer Aspekt der Erfindung betrifft einen Teigwarentrockner zum Trocknen von langen Teigwaren. Dieser Teigwarentrockner enthält einen Trocknungsraum zum Trocknen der Teigwaren sowie mindestens eine wie oben beschriebene erfindungsgemässe Übergabeeinrichtung oder mindestens eine wie oben beschriebene erfindungsgemässe Fördereinrichtung zum Transportieren von Stäben für lange Teigwaren und von auf den Stäben aufgehängten Teigwaren innerhalb des Trocknungsraumes.

Im Folgenden wird die Erfindung anhand von einem Ausführungsbeispiel und mehreren Zeichnungen im Detail erläutert. Dabei zeigen
- Figur 1:: einen Ausschnitt einer ersten erfindungsgemässen Fördereinrichtung zum Transportieren von Stäben für lange Teigwaren von einem unteren Kettenförderer auf einen oberen Kettenförderer in einer seitlichen Ansicht;
- Figur 2:: einen Ausschnitt einer zweiten erfindungsgemässen Fördereinrichtung zum Transportieren von Stäben für lange Teigwaren von einem oberen Kettenförderer auf einen unteren Kettenförderer in einer seitlichen Ansicht;
- Figur 3:: einen Mitnehmer der erfindungsgemässen Fördereinrichtung mit Aufnahmen in einer Mitnahmeposition;
- Figur 4:: den Mitnehmer mit Aufnahmen in einer Passierposition.
- Figur 5:: eine Ansicht eines Pendels.

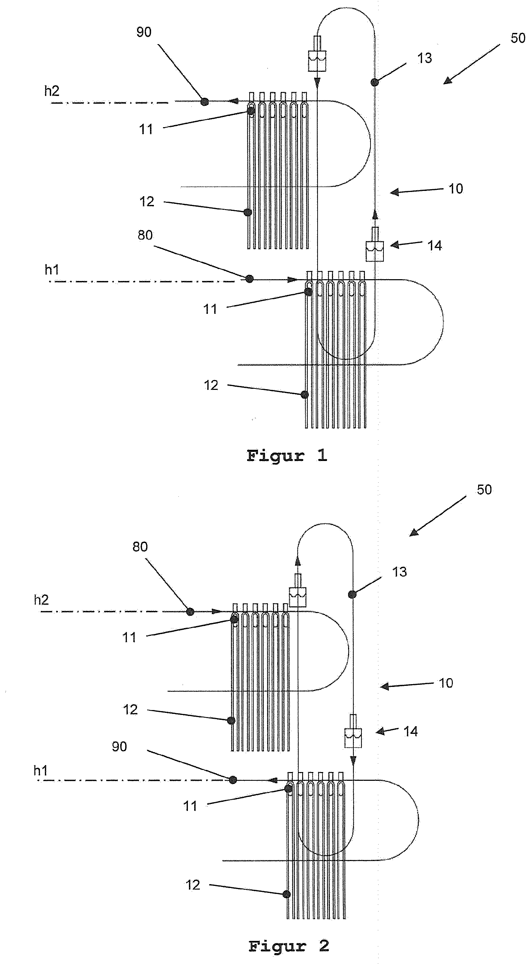

Figur 1 zeigt in einer Seitenansicht einen Ausschnitt einer ersten erfindungsgemässen Fördereinrichtung 50 zum Transportieren von Stäben 11 für lange Teigwaren 12, beispielsweise für Spaghetti. Diese Fördereinrichtung 50 kann etwa in einem Trocknungsraum eines hier nicht dargestellten Teigwarentrockners zum Trocknen der Teigwaren 12 angeordnet sein. Die Fördereinrichtung 50 enthält einen ersten Kettenförderer 80 zum Fördern der Stäbe 11, einen zweiten Kettenförderer 90 zum weiteren Fördern der Stäbe 11 sowie eine Übergabeeinrichtung 10 zum Transportieren der Stäbe 11 vom ersten Kettenförderer 80 zum zweiten Kettenförderer 90.

Zwei erste Förderketten 81 des ersten Kettenförderers 80, von denen hier nur eine erkennbar ist, bilden einen oberen Trum 82, mit dem die Stäbe 11 von links nach rechts in Richtung auf die Übergabeeinrichtung 10 hin transportiert werden sowie einen unteren Trum 83. Die zweiten Förderketten 91 des zweiten Kettenförderers 90, von denen hier auch nur eine erkennbar ist, bilden einen oberen Trum 92, mit dem die Stäbe 11 von rechts nach links in Richtung von der Übergabeeinrichtung 10 weg gefördert werden, sowie einen unteren Trum 93. Die ersten Förderketten 81 des ersten Kettenförderers 80 können von einem hier nicht dargestellten ersten Kettenrad angetrieben und umgelenkt werden, und die zweiten Förderketten 91 des zweiten Kettenförderers 90 können von einem ebenfalls hier nicht dargestellten zweiten Kettenrad angetrieben und umgelenkt werden.

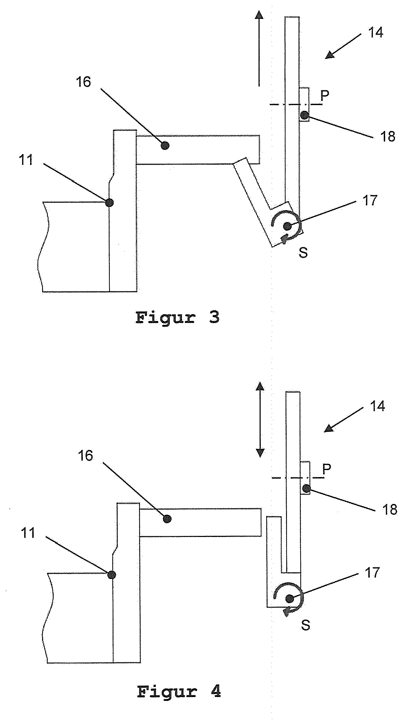

Die Übergabeeinrichtung 10 transportiert im hier dargestellten ersten Ausführungsbeispiel die Stäbe von unten nach oben. Genauer ist der untere Trum 82 des ersten Kettenförderers 80 auf einer ersten Höhe h1 angeordnet, und der obere Trum 92 des zweiten Kettenförderers 90 ist auf einer zweiten Höhe h2 angeordnet, wobei die erste Höhe h1 kleiner ist als die zweite Höhe h2. Die Übergabeeinrichtung 10 enthält ein Paar von Transportketten 13, von denen hier ebenfalls nur eine erkennbar ist. Weiterhin enthält die Übergabeeinrichtung 10 eine Vielzahl von Pendeln 14, die auch in Figur 2 und im Detail in den Figuren 3 und 4 dargestellt sind.

Figur 2 zeigt in einer Seitenansicht einen Ausschnitt einer zweiten erfindungsgemässen Fördereinrichtung zum Transportieren von Stäben 11 für lange Teigwaren 12. Auch hier enthält die Fördereinrichtung einen ersten Kettenförderer 80 zum Fördern der Stäbe 11, einen zweiten Kettenförderer 90 zum weiteren Fördern der Stäbe 11 sowie eine Übergabeeinrichtung 10 zum Transportieren der Stäbe 11 vom ersten Kettenförderer 80 zum zweiten Kettenförderer 90.

Bei der zweiten erfindungsgemässen Fördereinrichtung transportiert die Übergabeeinrichtung 10 jedoch die Stäbe von oben nach unten. Genauer ist der untere Trum 82 des ersten Kettenförderers 80 auf einer ersten Höhe h1 angeordnet, und der obere Trum 92 des zweiten Kettenförderers 90 ist auf einer zweiten Höhe h2 angeordnet, wobei die erste Höhe h1 grösser ist als die zweite Höhe h2. Die Übergabeeinrichtung 10 enthält ein Paar von Transportketten 13, von denen hier ebenfalls nur eine erkennbar ist. Weiterhin enthält die Übergabeeinrichtung 10 eine Vielzahl von Pendeln 14, die im Detail in den Figuren 3 und 4 dargestellt sind.

In Figur 3 ist ein erster Übergabebereich dargestellt, in dem Enden 16 von Stäben 11 vom oberen Trum 82 des ersten Kettenförderers 80 aufgenommen werden. Dieses Aufnehmen geschieht mit Hilfe eines an der Transportkette 13 angeordneten Pendels 14. Jedes der Pendel 14 ist um eine jeweilige Pendelachse P pendelnd an einer der Transportketten 13 angeordnet. Diese Pendelachse P weist in Richtung auf die jeweils andere, hier nicht erkennbare Transportkette 13. Das Pendel 14 enthält eine Halterung 18, mit der es an der Transportkette 13 befestigt ist, sowie einen beweglichen Mitnehmer 17.

Das Pendel 14 enthält einen Mitnehmer 17 mit zwei Aufnahmen 15 zum Aufnehmen je eines Endes 16 eines Stabes 11. Bei vorgegebener Taktfrequenz (das heisst bei vorgegebener Anzahl der pro Zeiteinheit vom ersten Kettenförderer 80 und vom zweiten Kettenförderer 90 geförderten Stäbe 11) müssen sich die Transportketten 13 der Übergabeeinrichtung 10 also nur mit halber Geschwindigkeit bewegen. Auf diese Weise wird die mechanische Belastung mehrerer Bauteile der Übergabeeinrichtung 10 stark reduziert. Im gleichen Masse können auch die Beschleunigungen reduziert werden, sodass die Teigwaren 12 bei den Umlenkungen der Stäbe 11 weniger stark schwingen und folglich das Risiko von Beschädigungen oder Verflechtungen der Teigwaren 12 reduziert wird.

Der Mitnehmer 17 und damit auch deren Aufnahmen 15 sind gegenüber der Halterung 18 um eine Schwenkachse S schwenkbar, die senkrecht zur Pendelachse P und parallel zu den Ebenen verläuft, innerhalb deren sich die Transportketten 13 bewegen. Auf diese Weise ist der Mitnehmer 17 zwischen einer in Figur 3 dargestellten Mitnahmeposition und einer in Figur 4 dargestellten Passierposition schwenkbar.

Mit den Aussparungen im Mitnehmer 17 können gleichzeitig die Enden 16 eines oder mehrerer Stäbe 11 aufgenommen werden.

In dem in Figur 1 gezeigten ersten Übergabebereich passieren die Transportketten 13 den oberen Trum 82 des ersten Kettenförderers 80 von unten nach oben. In diesem Bereich sind die Mitnehmer 17 in der Mitnahmeposition A. In dieser Mitnahmeposition A können die Aufnahmen der Mitnehmer 17 in Eingriff mit einem Ende 16 eines Stabes 11 gelangen.

In dieser Mitnahmeposition verbleiben die Aufnahmen der Mitnehmer 17, während das Pendel 14 zum oberen Trum 92 des zweiten Kettenförderers 90 bewegt wird. Aufgrund der pendelnden Lagerung der Pendel 14 ändert sich hierbei ihre Orientierung nicht. Anschliessend werden die Stäbe 11 in einem nicht im Detail dargestellten zweiten Übergabebereich auf dem oberen Trum 92 des zweiten Kettenförderers 90 abgelegt, wenn die Pendel 14 diesen oberen Trum 92 von oben nach unten passieren.

In der Figur 4 ist ein Bereich dargestellt, in dem sich der Mitnehmer 17 des Pendels 14 in der Passierposition B befindet, um keine Stäbe abzuheben oder damit zu kollidieren.

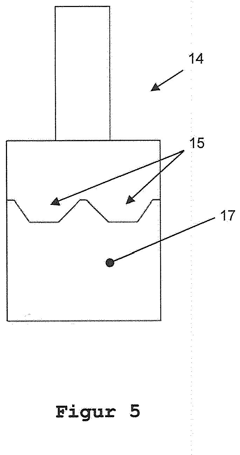

In der Figur 5 ist ein Pendel 14 mit dazugehörende Mitnehmer 17 und Aufnahmen 15 schematisch dargestellt.

## Patentansprüche

1. Übergabeeinrichtung (10) zum Transportieren von Stäben (11) für lange Teigwaren (12) von einem ersten Kettenförderer (80) zu einem zweiten Kettenförderer (90), wobei die Übergabeeinrichtung (10) ein Paar von Transportketten (13) sowie eine Vielzahl von Pendeln (14) enthält, wobei jeder Pendel (14) um eine Pendelachse (P) pendelnd an einer der Transportketten (13) angeordnet ist, wobei die Pendelachse (P) in Richtung auf die jeweils andere Transportkette (13) weist und wobei die Pendel (14) jeweils mindestens einen Mitnehmer enthaltend mindestens eine Aufnahme (15) zum Aufnehmen je eines Endes (16) eines Stabes (11) enthalten, **dadurch gekennzeichnet, dass** die mindestens eine Aufnahme (15) zwischen einer Mitnahmeposition (A) und einer Passierposition (B) bewegbar ist, wobei die mindestens eine Aufnahme (15) beim Passieren eines Trums (82, 83, 92, 93) des ersten Kettenförderers (80) oder des zweiten Kettenförderers (90) nur in der Mitnahmeposition (A), nicht aber auch in der Passierposition (B), in Eingriff mit einem Ende (16) des Stabes (11) bringbar ist.

2. Übergabeeinrichtung (10) gemäss Anspruch 1, **dadurch gekennzeichnet, dass** die Pendel (14) jeweils eine Halterung (18) aufweisen, mit der sie an der Transportkette (13) befestigt sind, und dass der Mitnehmer (17) gegenüber der Halterung (18) beweglich ist.

3. Übergabeeinrichtung (10) gemäss Anspruch 2, **dadurch gekennzeichnet, dass** der Mitnehmer (17) gegenüber der Halterung (18) um eine Schwenkachse (S) zwischen der Mitnahmeposition (A) und der Passierposition (B) schwenkbar ist, wobei die Schwenkachse (S) transversal zur Pendelachse (P) verläuft.

4. Übergabeeinrichtung (10) gemäss Anspruch 3, **dadurch gekennzeichnet, dass** die Schwenkachse (S) senkrecht zur Pendelachse (P) verläuft.

5. Übergabeeinrichtung (10) gemäss einem der Ansprüche 3 und 4, **dadurch gekennzeichnet, dass** die mindestens eine Aufnahme (15) oberhalb der Schwenkachse (S) angeordnet ist.

6. Übergabeeinrichtung (10) gemäss einem der Ansprüche 1 bis 5, **dadurch gekennzeichnet, dass** die Mitnehmer (17) jeweils mindestens zwei Aufnahmen (15) zum gleichzeitigen Aufnehmen je eines Endes (16) zweier Stäbe (11) aufweisen, wobei die Aufnahmen (15) insbesondere in Form von Aussparungen ausgestaltet sind.

7. Übergabeeinrichtung (10) gemäss einem der vorangehenden Ansprüche, **dadurch gekennzeichnet, dass** die Transportketten (13) Elevatorketten sind, die zum Passieren eines oberen Trums (82) des ersten Kettenförderers (80) von unten nach oben ausgebildet und angeordnet sind und die Übergabeeinrichtung (10) erste Führungsmittel (30) aufweist, welche vor einem Passieren des oberen Trums (82) von unten nach oben die mindestens eine Aufnahme (15) des Mitnehmers (17) in die Mitnahmeposition (A) bewegen.

8. Übergabeeinrichtung (10) gemäss Anspruch 7, **dadurch gekennzeichnet, dass** die Transportketten (13) zum Passieren eines oberen Trums (92) des zweiten Kettenförderers (90) von unten nach oben ausgebildet und angeordnet sind und die Übergabeeinrichtung (10) zweite Führungsmittel (40) aufweist, welche vor einem Passieren des oberen Trums (92) von unten nach oben die mindestens einen Aufnahme (15) des Mitnehmers (17) in die Passierposition (B) bewegen.

9. Übergabeeinrichtung (10) gemäss Anspruch 8, **dadurch gekennzeichnet, dass** die zweiten Führungsmittel (40) zum Bewegen der mindestens einen Aufnahme (15) des Mitnehmers (17) in die Passierposition (B) nach einem Passieren des oberen Trums (92) von oben nach unten ausgebildet und angeordnet sind.

10. Übergabeeinrichtung (10) gemäss einem der vorangehenden Ansprüche, **dadurch gekennzeichnet, dass** sie zum Transportieren von Stäben (11) für lange Teigwaren (12) von einem ersten Kettenförderer (80) auf einer ersten Höhe (h1) zu einem zweiten Kettenförderer (90) auf einer zweiten Höhe (h2) ausgebildet ist, wobei die erste Höhe (h1) von der zweiten Höhe (h2) verschieden ist.

11. Fördereinrichtung (50) zum Transportieren von Stäben (11) für lange Teigwaren (12), enthaltend
- einen ersten Kettenförderer (80) mit einem Paar von ersten Förderketten (81),
- einen zweiten Kettenförderer (90) mit einem Paar von zweiten Förderketten (91),
- eine Übergabeeinrichtung (10) gemäss einem der vorangehenden Ansprüche zum Transportieren der Stäbe (11) vom ersten Kettenförderer (80) zum zweiten Kettenförderer (90) .

12. Fördereinrichtung (50) gemäss Anspruch 11, **dadurch gekennzeichnet, dass** die Transportketten (13) der Übergabeeinrichtung (10) und der erste und der zweite Kettenförderer (80, 90) derart ausgebildet und angeordnet sind, dass die Transportketten (13) in dieser Reihenfolge
- von unten nach oben einen oberen Trum (82) des ersten Kettenförderers (80) passieren, wobei sich die dortigen Aufnahmen (15) des Mitnehmers (17) des Pendels (14) in der Mitnahmeposition (A) befinden, um mindestens einen Stab (11) aufnehmen und transportieren zu können,
- von oben nach unten einen oberen Trum (92) des zweiten Kettenförderers (90) passieren, wobei sich die dortigen Aufnahmen (15) des Mitnehmers (17) des Pendels (14) noch immer in der Mitnahmeposition (A) befinden, um dort den mindestens einen Stab (11) ablegen zu können,
- von oben nach unten den oberen Trum (82) des ersten Kettenförderers (80) passieren, wobei sich die dortigen Aufnahmen (15) des Mitnehmers (17) des Pendels (14) in der Passierposition befinden.

13. Fördereinrichtung (50) gemäss Anspruch 11, **dadurch gekennzeichnet, dass**
die Transportketten (13) der Übergabeeinrichtung (10) und der erste und der zweite Kettenförderer (80, 90) derart ausgebildet und angeordnet sind, dass die Transportketten (13) in dieser Reihenfolge
- von unten nach oben einen oberen Trum (82) des ersten Kettenförderers (80) passieren, wobei sich die dortigen Aufnahmen (15) des Mitnehmers (17) des Pendels (14) in der Mitnahmeposition (A) befinden, um dort mindestens einen Stab (11) aufnehmen und transportieren zu können,
- von oben nach unten einen oberen Trum (92) des zweiten Kettenförderers (90) passieren, wobei sich die dortigen Aufnahmen (15) des Mitnehmers (17) des Pendels (14) noch immer in der Mitnahmeposition (A) befinden, um dort den mindestens einen Stab (11) ablegen zu können,
- von unten nach oben einen oberen Trum (92) des zweiten Kettenförderers (90) passieren, wobei sich die dortigen Aufnahmen (15) des Mitnehmers (17) des Pendels (14) in der Passierposition befinden, um dort keinen Stab (11) aufzunehmen.

14. Verfahren zum Betreiben einer Übergabeeinrichtung (10) gemäss einem der Ansprüche 1 bis 10 oder einer Fördereinrichtung (50) gemäss einem der Ansprüche 11 bis 13, enthaltend die folgenden Schritte:
a) Bewegen der jeweils mindestens einen Aufnahme (15) des Mitnehmers (17) zweier gegenüberliegender Pendel (14) in die Mitnahmeposition (A),
b) Aufnehmen mindestens eines Stabes (11) von einem oberen Trum (82) des ersten Kettenförderers (80) mittels der Aufnahme (15) des Mitnehmers (17) der zwei Pendel (14),
c) Transportieren des Stabes (11) vom ersten Kettenförderer (80) zum zweiten Kettenförderer (90),
d) Ablegen des Stabes (11) auf einem oberen Trum (92) des zweiten Kettenförderers (90),
e) Bewegen der Aufnahme (15) des Mitnehmers (17) der zwei Pendel (14) in die Passierposition (B).

15. Teigwarentrockner zum Trocknen von langen Teigwaren (12), enthaltend einen Trocknungsraum zum Trocken der Teigwaren (12) sowie mindestens eine Übergabeeinrichtung (10) gemäss einem der Ansprüche 1 bis 10 oder mindestens eine Fördereinrichtung (50) gemäss einem der Ansprüche 11 bis 13 zum Transportieren von Stäben (11) und von auf den Stäben (11) aufgehängten Teigwaren (12) innerhalb des Trocknungsraumes.

## Claims

1. Transfer device (10) for transporting bars (11) for long pieces of pasta (12) from a first chain conveyor (80) to a second chain conveyor (90), wherein the transfer device (10) comprises a pair of transportation chains (13) and a multiplicity of pendulums (14), wherein each pendulum (14) is disposed on one of the transportation chains (13) so as to swing about a pendulum axis (P), wherein the pendulum axis (P) points in the direction of the respective other transportation chain (13), and wherein the pendulums (14) in each case comprise at least one entrainment element comprising at least one receptacle (15) for receiving in each case one end (16) of a bar (11), **characterized in that** the at least one receptacle (15) is movable between an entraining position (A) and a passing position (B), wherein the at least one receptacle (15) when passing a chain portion (82, 83, 92, 93) of the first chain conveyor (80) or of the second chain conveyor (90) is capable of being brought to engage with one end (16) of the bar (11) only in the entraining position (A) but not in the passing position (B).

2. Transfer device (10) according to Claim 1, **characterized in that** the pendulums (14) in each case have one mounting (18) by way of which said pendulums (14) are fastened to the transportation chain (13), and **in that** the entrainment element (17) is movable in relation to the mounting (18).

3. Transfer device (10) according to Claim 2, **characterized in that** the entrainment element (17) in relation to the mounting (18) is pivotable about a pivot axis (S) between the entraining position (A) and the passing position (B), wherein the pivot axis (S) runs so as to be transverse to the pendulum axis (P).

4. Transfer device (10) according to Claim 3, **characterized in that** the pivot axis (S) runs so as to be perpendicular to the pendulum axis (P).

5. Transfer device (10) according to one of Claims 3 and 4, **characterized in that** the at least one receptacle (15) is disposed above the pivot axis (S) .

6. Transfer device (10) according to one of Claims 1 to 5, **characterized in that** the entrainment elements (17) in each case have at least two receptacles (15) for receiving simultaneously in each case one end (16) of two bars (11), wherein the receptacles (15) are designed in particular in the form of clearances.

7. Transfer device (10) according to one of the preceding claims, **characterized in that** the transportation chains (13) are elevator chains which for passing an upper chain portion (82) of the first chain conveyor (80) are configured and disposed from the bottom to the top, and the transfer device (10) has first guide means (30) which prior to passing the upper chain portion (82) move the at least one receptacle (15) of the entrainment element (17) from the bottom to the top into the entraining position (A).

8. Transfer device (10) according to Claim 7, **characterized in that** the transportation chains (13) for passing an upper chain portion (92) of the second chain conveyor(90) are configured and disposed from the bottom to the top, and the transfer device (10) has second guide means (40) which prior to passing the upper chain portion (92) move the at least one receptacle (15) of the entrainment element (17) from the bottom to the top into the passing position (B).

9. Transfer device (10) according to Claim 8, **characterized in that** the second guide means (40) are configured and disposed for moving the at least one receptacle (15) of the entrainment element (17) into the passing position (B) upon passing the upper chain portion (92) from the top to the bottom.

10. Transfer device (10) according to one of the preceding claims, **characterized in that** said transfer device (10) is configured for transporting bars (11) for long pieces of pasta (12) from a first chain conveyor (80) at a first height (h1) to a second chain conveyor (90) at a second height (h2), wherein the first height (h1) differs from the second height (h2).

11. Conveying device (50) for transporting bars (11) for long pieces of pasta (12), comprising
- a first chain conveyor (80) having a pair of first conveying chains (81),
- a second chain conveyor (90) having a pair of second conveying chains (91),
- a transfer device (10) according to one of the preceding claims, for transporting the bars (11) from the first chain conveyor (80) to the second chain conveyor (90).

12. Conveying device (50) according to Claim 11, **characterized in that** the transportation chains (13) of the transfer device (10), and the first and the second chain conveyor (80, 90) are configured and disposed in such a manner that the transportation chains (13) in this sequence
- pass an upper chain portion (82) of the first chain conveyor (80) from the bottom to the top, wherein the receptacles (15) therein of the entrainment element (17) of the pendulum (14) are located in the entraining position (A) in order to be able to receive and transport at least one bar (11),
- pass an upper chain portion (92) of the second chain conveyor (90) from the top to the bottom, wherein the receptacles (15) therein of the entrainment element (17) of the pendulum (14) are still located in the entraining position (A) in order to be able to deposit therein the at least one bar (11),
- pass the upper chain portion (82) of the first chain conveyor (80) from the top to the bottom, wherein the receptacles (15) therein of the entrainment element (17) of the pendulum (14) are located in the passing position.

13. Conveying device (50) according to Claim 11, **characterized in that**
the transportation chains (13) of the transfer device (10), and the first and the second chain conveyor (80, 90) are configured and disposed in such a manner that the transportation chains (13) in this sequence
- pass an upper chain portion (82) of the first chain conveyor (80) from the bottom to the top, wherein the receptacles (15) therein of the entrainment element (17) of the pendulum (14) are located in the entraining position (A) in order to be able to receive and transport therein at least one bar (11),
- pass an upper chain portion (92) of the second chain conveyor (90) from the top to the bottom, wherein the receptacles (15) therein of the entrainment element (17) of the pendulum (14) are still located in the entraining position (A) in order to be able to deposit therein the at least one bar (11),
- pass an upper chain portion (92) of the second chain conveyor (90) from the bottom to the top, wherein the receptacles (15) therein of the entrainment element (17) of the pendulum (14) are located in the passing position in order for no bar (11) to be received therein.

14. Method for operating a transfer device (10) according to one of Claims 1 to 10, or a conveying device (50) according to one of Claims 11 to 13, said method comprising the following steps:
a) moving the in each case at least one receptacle (15) of the entrainment element (17) of two opposite pendulums (14) into the entraining position (A),
b) receiving at least one bar (11) from an upper chain portion (82) of the first chain conveyor (80) by means of the receptacle (15) of the entrainment element (17) of the two pendulums (14),
c) transporting the bar (11) from the first chain conveyor (80) to the second chain conveyor(90),
d) depositing the bar (11) on an upper chain portion (92) of the second chain conveyor (90),
e) moving the receptacle (15) of the entrainment element (17) of the two pendulums (14) into the passing position (B).

15. Pasta dryer for drying long pieces of pasta (12), comprising a drying chamber for drying the pieces of pasta (12), and at least one transfer device (10) according to one of Claims 1 to 10, or at least one conveying device (50) according to one of Claims 11 to 13, for transporting bars (11) and pieces of pasta (12) that are suspended from the bars (11) within the drying chamber.

## Revendications

1. Dispositif de transfert (10) pour transporter des tiges (11) pour des produits longs à base de pâte (12) depuis un premier transporteur à chaîne (80) jusqu'à un deuxième transporteur à chaîne (90), le dispositif de transfert (10) contenant une paire de chaînes de transport (13) ainsi qu'une pluralité de pendules (14), chaque pendule (14) étant disposé de manière à pouvoir osciller autour d'un axe de pendule (P) au niveau de l'une des chaînes de transport (13), l'axe de pendule (P) étant orienté dans la direction de l'autre chaîne de transport respective (13), et les pendules (14) contenant à chaque fois au moins un dispositif d'entraînement contenant au moins un logement (15) pour recevoir à chaque fois une extrémité (16) d'une tige (11), **caractérisé en ce que** l'au moins un logement (15) peut être déplacé entre une position d'entraînement (A) et une position de passage (B), l'au moins un logement (15), lors du passage devant un tronçon (82, 83, 92, 93) du premier transporteur à chaîne (80) ou du deuxième transporteur à chaîne (90), pouvant être amené en prise avec une extrémité (16) de la tige (11) seulement dans la position d'entraînement (A), mais pas dans la position de passage (B).

2. Dispositif de transfert (10) selon la revendication 1, **caractérisé en ce que** les pendules (14) présentent à chaque fois une fixation (18) avec laquelle ils sont fixés à la chaîne de transport (13) et **en ce que** le dispositif d'entraînement (17) est déplaçable par rapport à la fixation (18).

3. Dispositif de transfert (10) selon la revendication 2, **caractérisé en ce que** le dispositif d'entraînement (17) peut pivoter par rapport à la fixation (18) autour d'un axe de pivotement (S) entre la position d'entraînement (A) et la position de passage (B), l'axe de pivotement (S) s'étendant transversalement à l'axe de pendule (P).

4. Dispositif de transfert (10) selon la revendication 3, **caractérisé en ce que** l'axe de pivotement (S) s'étend perpendiculairement à l'axe de pendule (P).

5. Dispositif de transfert (10) selon l'une quelconque des revendications 3 et 4, **caractérisé en ce que** l'au moins un logement (15) est disposé au-dessus de l'axe de pivotement (S).

6. Dispositif de transfert (10) selon l'une quelconque des revendications 1 à 5, **caractérisé en ce que** les dispositifs d'entraînement (17) présentent à chaque fois au moins deux logements (15) pour recevoir simultanément à chaque fois une extrémité (16) de deux tiges (11), les logements (15) étant configurés notamment sous la forme d'évidements.

7. Dispositif de transfert (10) selon l'une quelconque des revendications précédentes, **caractérisé en ce que** les chaînes de transport (13) sont des chaînes élévatrices qui sont réalisées et disposées pour le passage devant un tronçon supérieur (82) du premier transporteur à chaîne (80) du bas vers le haut et le dispositif de transfert (10) présente des premiers moyens de guidage (30) qui, avant le passage devant le tronçon supérieur (82) du bas vers le haut, déplacent l'au moins un logement (15) du dispositif d'entraînement (17) dans la position d'entraînement (A).

8. Dispositif de transfert (10) selon la revendication 7, **caractérisé en ce que** les chaînes de transport (13) sont réalisées et disposées pour le passage devant un tronçon supérieur (92) du deuxième transporteur à chaîne (90) du bas vers le haut et le dispositif de transfert (10) présente des deuxièmes moyens de guidage (40) qui, avant un passage devant le tronçon supérieur (92) du bas vers le haut, déplacent l'au moins un logement (15) du dispositif d'entraînement (17) dans la position de passage (B).

9. Dispositif de transfert (10) selon la revendication 8, **caractérisé en ce que** les deuxièmes moyens de guidage (40) sont réalisés et disposés pour déplacer l'au moins un logement (15) du dispositif d'entraînement (17) dans la position de passage (B) après un passage devant le tronçon supérieur (92) du haut vers le bas.

10. Dispositif de transfert (10) selon l'une quelconque des revendications précédentes, **caractérisé en ce qu'**il est réalisé pour transporter des tiges (11) pour des produits longs à base de pâte (12) depuis un premier transporteur à chaîne (80) à une première hauteur (h1) jusqu'à un deuxième transporteur à chaîne (90) à une deuxième hauteur (h2), la première hauteur (h1) étant différente de la deuxième hauteur (h2).

11. Dispositif de transport (50) pour transporter des tiges (11) pour des produits longs à base de pâte (12), comprenant
- un premier transporteur à chaîne (80) avec une paire de premières chaînes de transport (81),
- un deuxième transporteur à chaîne (90) avec une paire de deuxièmes chaînes de transport (91),
- un dispositif de transfert (10) selon l'une quelconque des revendications précédentes pour transporter les tiges (11) du premier transporteur à chaîne (80) au deuxième transporteur à chaîne (90).

12. Dispositif de transport (50) selon la revendication 11, **caractérisé en ce que** les chaînes de transport (13) du dispositif de transfert (10) et le premier et le deuxième transporteur à chaîne (80, 90) sont réalisés et disposés de telle sorte que les chaînes de transport (13), dans cet ordre,
- passent du bas vers le haut devant un tronçon supérieur (82) du premier transporteur à chaîne (80), les logements (15) du dispositif d'entraînement (17) du pendule (14) à cet endroit se trouvant dans la position d'entraînement (A) afin de pouvoir recevoir et transporter au moins une tige (11),
- passent du haut vers le bas devant un tronçon supérieur (92) du deuxième transporteur à chaîne (90), les logements (15) du dispositif d'entraînement (17) du pendule (14) à cet endroit se trouvant encore dans la position d'entraînement (A) afin de pouvoir déposer à cet endroit l'au moins une tige (11),
- passent du haut vers le bas devant le tronçon supérieur (82) du premier transporteur à chaîne (80), les logements (15) du dispositif d'entraînement (17) du pendule (14) à cet endroit se trouvant dans la position de passage.

13. Dispositif de transport (50) selon la revendication 11, **caractérisé en ce que** les chaînes de transport (13) du dispositif de transfert (10) et le premier et le deuxième transporteur à chaîne (80, 90) sont réalisés et disposés de telle sorte que les chaînes de transport (13), dans cet ordre,
- passent du bas vers le haut devant un tronçon supérieur (82) du premier transporteur à chaîne (80), les logements (15) du dispositif d'entraînement (17) du pendule (14) à cet endroit se trouvant dans la position d'entraînement (A) afin de pouvoir y recevoir et transporter au moins une tige (11),
- passent du haut vers le bas devant un tronçon supérieur (92) du deuxième transporteur à chaîne (90), les logements (15) du dispositif d'entraînement (17) du pendule (14) à cet endroit se trouvant encore dans la position d'entraînement (A) afin de pouvoir déposer à cet endroit l'au moins une tige (11),
- passent du bas vers le haut devant un tronçon supérieur (92) du deuxième transporteur à chaîne (90), les logements (15) du dispositif d'entraînement (17) du pendule (14) à cet endroit se trouvant dans la position de passage afin de n'y recevoir aucune tige (11).

14. Procédé pour faire fonctionner un dispositif de transfert (10) selon l'une quelconque des revendications 1 à 10, ou un dispositif de transport (50) selon l'une quelconque des revendications 11 à 13, comprenant les étapes suivantes :
a) déplacement de l'au moins un logement respectif (15) du dispositif d'entraînement (17) de deux pendules (14) opposés dans la position d'entraînement (A),
b) réception d'au moins moins une tige (11) par un tronçon supérieur (82) du premier transporteur à chaîne (80) au moyen du logement (15) du dispositif d'entraînement (17) des deux pendules (14),
c) transport de la tige (11) du premier transporteur à chaîne (80) jusqu'au deuxième transporteur à chaîne (90),
d) dépose de la tige (11) sur un tronçon supérieur (92) du deuxième transporteur à chaîne (90),
e) déplacement du logement (15) du dispositif d'entraînement (17) des deux pendules (14) dans la position de passage (B).

15. Dispositif de séchage de produits à base de pâte pour sécher des produits longs à base de pâte (12), comprenant un espace de séchage pour sécher les produits à base de pâte (12) ainsi qu'au moins un dispositif de transfert (10) selon l'une quelconque des revendications 1 à 10 ou au moins un dispositif de transport (50) selon l'une quelconque des revendications 11 à 13, pour le transport de tiges (11) et de produits à base de pâte (12) suspendus sur les tiges (11) à l'intérieur de l'espace de séchage.
